# EUROPEAN PATENT APPLICATION

(11) **EP 4 672 696 A1**
(43) Date of publication of application: **31.12.2025**
(21) Application number: 24766180.4
(22) Date of filing: 10.01.2024
(51) Int. Cl.: H04L 41/0896

(54) **CLOUD DESKTOP OPTIMIZATION METHOD, CLOUD DESKTOP SERVER AND STORAGE MEDIUM**

(30) Priority: 09.03.2023 CN 202310254964
(71) Applicant: Cloud Intelligence Assets Holding (Singapore) Private Limited, Singapore 189554 (SG)
(72) Inventor: LI, Xiaowei, Shanghai 200120 (CN); LI, Jiangwei, Beijing 100102 (CN); LIU, Cheng, Shanghai 200120 (CN); CHENG, Yan, Beijing 100102 (CN); MIN, Hongbo, Shanghai 200120 (CN); REN, Jinkui, Shanghai 200120 (CN); ZHANG, Xiantao, Hangzhou, Zhejiang 310030 (CN)
(74) Representative: Dai, Simin
(86) International application number: PCT/CN2024/071508
(87) International publication number: WO 2024/183457

(57) **Abstract**

Provided in the embodiments of the present application are a cloud desktop optimization method, a cloud desktop server and a storage medium. The method comprises: performing cloud desktop optimization periodically, and, within a single optimization cycle, estimating an available network bandwidth between a cloud desktop terminal and a cloud desktop server; then reasonably allocating the network bandwidth to different types of desktop data; on the basis of the bandwidth allocation result, adjusting respective data generation rates corresponding to the different types of desktop data; and then transmitting to the cloud desktop terminal various types of desktop data generated in the cloud desktop server according to the adjusted data generation rates. Accordingly, by using bandwidth allocation results as guidance, the method can schedule data generation rates of various types of desktop data from the sources, so as to effectively prevent the total amount of data sent by cloud desktop servers from exceeding network bandwidths, thus avoiding occurrence of network congestion. Therefore, the present application can smoothly transmit various types of desktop data to cloud desktop terminals, providing smooth user experience even under poor network conditions.

## Description

This disclosure claims priority to Chinese Patent Application No. 202310254964.8, filed with the Chinese National Intellectual Property Administration on March 9, 2023 and entitled "CLOUD DESKTOP OPTIMIZATION METHOD, CLOUD DESKTOP SERVER, AND STORAGE MEDIUM", which is incorporated herein by reference in its entirety.

### TECHNICAL FIELD

This disclosure relates to the field of cloud computing technologies, and in particular, to a cloud desktop optimization method, a cloud desktop server, and a storage medium.

### BACKGROUND

Cloud desktop, also known as desktop virtualization or cloud computer, is a novel model to replace traditional computers. A cloud desktop server is responsible for data computing and storage. A cloud desktop terminal is responsible for display and keyboard and mouse input. The cloud desktop server and the cloud desktop terminal perform data transmission with each other through a network.

At present, due to network instability, bandwidth preemption, or other reasons, the network conditions between the cloud desktop terminal and the cloud desktop server may be poor. In this case, a problem such as display stuttering may occur in the cloud desktop terminal, affecting user use experience.

### SUMMARY

Aspects of this disclosure provide a cloud desktop optimization method, a cloud desktop server, and a storage medium, to optimize use experience of a cloud desktop.

An embodiment of this disclosure provides a cloud desktop optimization method, including: estimating a network bandwidth between a cloud desktop terminal and a cloud desktop server in a current optimization period; performing an allocation operation on the network bandwidth to determine bandwidth upper limit values respectively allocated to a plurality of types of desktop data to be transmitted from the cloud desktop server to the cloud desktop terminal; adjusting, for each of the plurality of types of desktop data, a data generation rate for the type of desktop data based on the bandwidth upper limit value allocated to the type of desktop data; and transmitting each type of desktop data generated in the cloud desktop server according to the adjusted data generation rates to the cloud desktop terminal.

An embodiment of this disclosure further provides a cloud desktop server, including a memory and a processor, where the memory is configured to store one or more computer instructions; and the processor is coupled to the memory, and is configured to execute the one or more computer instructions to implement the foregoing cloud desktop optimization method.

An embodiment of this disclosure further provides a computer-readable storage medium, having computer instructions stored therein, where the computer instructions, when executed by one or more processors, cause the one or more processors to perform the foregoing cloud desktop optimization method.

### BRIEF DESCRIPTION OF DRAWINGS

In the accompanying drawings, unless otherwise specified, the same reference numerals denote the same or similar components or elements throughout the accompanying drawings. The accompanying drawings are not necessarily drawn to scale. It should be understood that the accompanying drawings depict only some implementations disclosed according to this disclosure, and should not be construed as limiting the scope of this disclosure.
FIG. 1 is a schematic flowchart of a cloud desktop optimization method according to an exemplary embodiment of this disclosure.
FIG. 2 is a schematic logical diagram of a cloud desktop optimization method according to an exemplary embodiment of this disclosure.
FIG. 3 is a schematic logical diagram of an optional implementation of a cloud desktop optimization method according to an exemplary embodiment of this disclosure.
FIG. 4 is a schematic diagram of a structure of a cloud desktop server according to another exemplary embodiment of this disclosure.

### DETAILED DESCRIPTION

To make the objectives, technical solutions and advantages of this disclosure clearer, the technical solutions of this disclosure are clearly and completely described below with reference to specific embodiments and the corresponding accompanying drawings of this disclosure. Clearly, the described embodiments are only some embodiments rather than all embodiments of this disclosure. All other embodiments obtained by a person of ordinary skill in the art based on embodiments of this disclosure without creative efforts shall fall within the protection scope of this disclosure.

At present, when the network conditions between a cloud desktop terminal and a cloud desktop server are poor, a problem such as display stuttering may occur in the cloud desktop terminal, affecting user use experience. In view of this, in some embodiments of this disclosure, cloud desktop optimization may be performed periodically. An available network bandwidth between a cloud desktop terminal and a cloud desktop server may be estimated in a single optimization period, and then the network bandwidth may be reasonably allocated to different types of desktop data. Further, data generation rates respectively corresponding to the different types of desktop data may be adjusted based on a bandwidth allocation result. Then a plurality of types of desktop data generated in the cloud desktop server according to the adjusted data generation rates are transmitted to the cloud desktop terminal. Accordingly, the bandwidth allocation result may be used as a guide to schedule the data generation rates of the plurality of types of desktop data from a source. This can effectively prevent, from exceeding the network bandwidth, a total amount of data sent by the cloud desktop server, thereby avoiding network congestion. In this way, the plurality of types of desktop data can be smoothly transmitted to the cloud desktop terminal, thereby providing a user with smooth use experience even when the network conditions are poor.

The following describes the technical solutions provided in embodiments of this disclosure in detail with reference to the accompanying drawings.

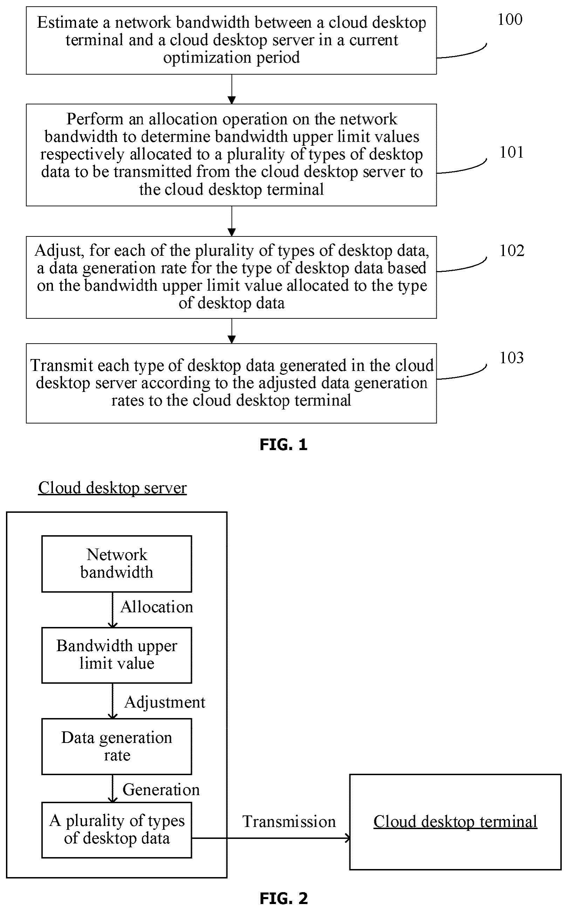

FIG. 1 is a schematic flowchart of a cloud desktop optimization method according to an exemplary embodiment of this disclosure. FIG. 2 is a schematic logical diagram of a cloud desktop optimization method according to an exemplary embodiment of this disclosure. The method may be performed by an optimization device. The optimization device may be implemented as software, hardware, or a combination of software and hardware, and may be integrated in a cloud server. Referring to FIG. 1, the method may include the following steps.

Step 100: Estimate a network bandwidth between a cloud desktop terminal and a cloud desktop server in a current optimization period.

Step 101: Perform an allocation operation on the network bandwidth to determine bandwidth upper limit values respectively allocated to a plurality of types of desktop data to be transmitted from the cloud desktop server to the cloud desktop terminal.

Step 102: Adjust, for each of the plurality of types of desktop data, a data generation rate for the type of desktop data based on the bandwidth upper limit value allocated to the type of desktop data.

Step 103: Transmit each type of desktop data generated in the cloud desktop server according to the adjusted data generation rates to the cloud desktop terminal.

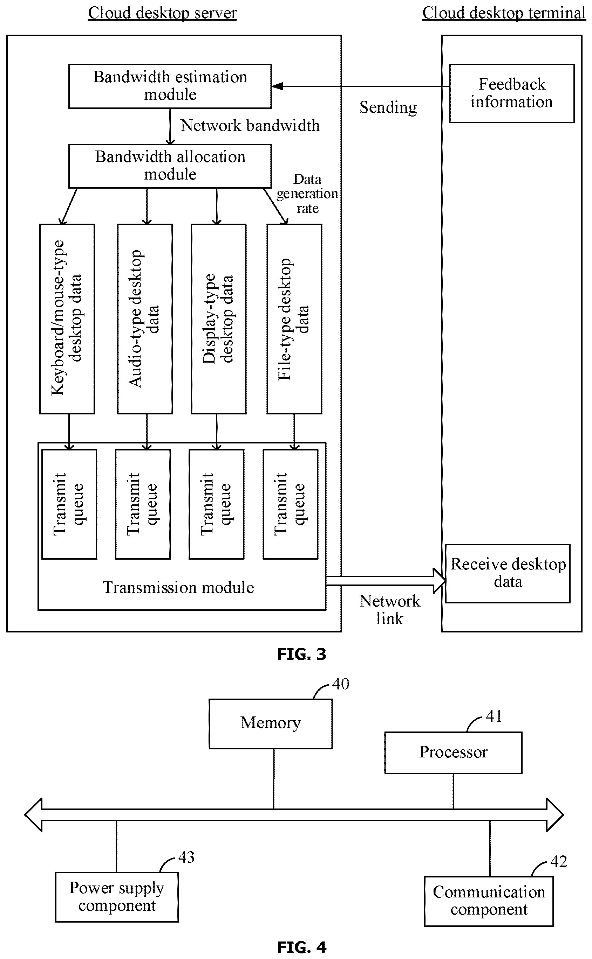

FIG. 3 is a schematic logical diagram of an optional implementation of a cloud desktop optimization method according to an exemplary embodiment of this disclosure. Referring to FIG. 3, the cloud desktop optimization method provided by this disclosure may be applied to a side of the cloud desktop server, and related functional modules may be added to the cloud desktop server to implement the cloud desktop optimization method according to this disclosure. The functional modules may include, but are not limited to, a bandwidth estimation module, a bandwidth allocation module, a transmission module, and the like. Of course, this is only an exemplary division method of the processing logic in this embodiment, but it should be understood that this embodiment is not limited to this division method, and the processing logic in this embodiment may also be divided into functional modules in other manners. Regardless of the division method used, the cloud desktop server in this embodiment can implement the cloud desktop optimization method according to this embodiment through cooperation of the functional modules obtained through division.

A cloud desktop technology mainly involves a cloud desktop server and a cloud desktop terminal. The cloud desktop server and the cloud desktop terminal perform data interaction through a network. This embodiment mainly focuses on desktop data transmitted from the cloud desktop server to the cloud desktop terminal, and proposes to optimize the transmission process of the desktop data to improve user experience of the cloud desktop.

It is found during research that a cloud desktop terminal is usually connected to a router through Wi-Fi, and then connected to a cloud desktop server through a public network. The stability of Wi-Fi and the public network cannot be ensured, and the available bandwidth is sometimes insufficient. There are often situations where multiple cloud desktop terminals access the cloud desktop server at the same time. For example, in scenarios such as where students in a classroom use cloud desktops for online classes or where company employees use cloud desktops for office work at the same time, the total bandwidth of network access ports is generally limited and is insufficient to support the simultaneous access of multiple cloud desktop terminals, resulting in that the bandwidth allocated to each cloud desktop terminal is very limited. A cloud desktop terminal copying a file from the cloud desktop server or being redirected to the network often occupies the entire network bandwidth, resulting in that there is no bandwidth available for other desktop data. In all these typical usage scenarios of cloud desktops, the problem of poor network conditions between the cloud desktop terminal and the cloud desktop server occurs, resulting in stuttering and unsmooth operation during the use of cloud desktops, affecting user experience.

The cloud desktop optimization method provided by this embodiment can optimize user experience, and can effectively avoid the problem of stuttering and enable the user to obtain a smooth use experience, especially when the network conditions are poor.

In this embodiment, cloud desktop optimization may be performed periodically. For convenience of description, the technical solution will be described below from the perspective of a single optimization period. It should be understood that cloud desktop optimization may be implemented in other optimization periods in this embodiment according to the same processing logic.

Referring to FIG. 1, in step 100, the network bandwidth between the cloud desktop terminal and the cloud desktop server may be estimated in the current optimization period. Step 100 may be implemented by the bandwidth estimation module. In this embodiment, a variety of implementations may be used to estimate the network adapter bandwidth.

Referring to FIG. 3, in an exemplary implementation, feedback information sent by the cloud desktop terminal is received, wherein the feedback information includes size information and arrival time information of each data packet received by the cloud desktop terminal from the cloud desktop server; and the network bandwidth between the cloud desktop terminal and the cloud desktop server is estimated according to the feedback information. In this implementation, the cloud desktop terminal may record the size information, the arrival time information, and the like of each data packet delivered by the cloud desktop server to the cloud desktop terminal, and feed back these information to the cloud desktop server. It can be understood that the feedback information can be used to reflect an actual bandwidth usage status between the cloud desktop terminal and the cloud desktop server, so that the network bandwidth obtained through network bandwidth estimation according to the feedback information will be closer to an actual network state between the cloud desktop terminal and the cloud desktop server, thereby providing a more accurate processing basis for subsequent steps.

In this implementation, an exemplary scheme of estimating the network bandwidth based on the feedback information may be: dividing a historical time period of a specified length counted backward from a current moment into a plurality of estimation time periods; determining an amount of data received by the cloud desktop terminal in each of the plurality of estimation time periods according to the feedback information; calculating, an actual used bandwidth in each of the plurality of estimation time periods according to the amount of data and a time period length corresponding to the estimation time period; and estimating the network bandwidth between the cloud desktop terminal and the cloud desktop server based on the actual used bandwidths respectively corresponding to the plurality of estimation time periods. Optionally, a maximum value may be selected from the actual used bandwidths corresponding to the plurality of estimation time periods and used as the actual used bandwidths corresponding to the estimation time periods. It should be understood that in this exemplary scheme, the actual used bandwidth corresponding to each estimation time period may be essentially understood as a real-time bandwidth between the cloud desktop terminal and the cloud desktop server, and the maximum value of the actual used bandwidths corresponding to the plurality of estimation time periods can reflect a maximum bandwidth used between the cloud desktop terminal and the cloud desktop server. This is because during the historical time period, data may not be transmitted evenly, but may be centrally transmitted in one or more estimation time periods. Therefore, the network bandwidth estimated by this exemplary scheme can be closer to the actual network status between the cloud desktop terminal and the cloud desktop server. Of course, in this exemplary scheme, an average value, a median value, or the like may also be selected from the actual used bandwidths corresponding to the plurality of estimation time periods and used as the actual used bandwidths corresponding to the estimation time periods, which is not limited in this embodiment.

In this embodiment, in addition to the method of estimating the network bandwidth based on the size information and the actual arrival information of each data packet actually generated between the cloud desktop terminal and the cloud desktop server, other methods such as a typical Bottleneck Bandwidth and Round-trip Time (BBR) bandwidth estimation technique may also be used to estimate the network bandwidth, which is not limited in this embodiment.

Based on this, referring to FIG. 1, in step 101, the allocation operation may be performed on the network bandwidth to determine the bandwidth upper limit values respectively allocated to the plurality of types of desktop data to be transmitted from the cloud desktop server to the cloud desktop terminal.

There are numerous types of desktop data that need to be transmitted between the cloud desktop server and the cloud desktop terminal. These desktop data may be classified into keyboard/mouse-type desktop data, audio-type desktop data, display-type desktop data, file-type desktop data, and the like. The keyboard/mouse-type desktop data mainly includes some data related to keyboard and mouse operations. The data amount of the keyboard/mouse-type desktop data is small, and users have high delay sensitivity to the keyboard/mouse-type desktop data. The audio-type desktop data mainly includes some audio data. The display-type desktop data mainly includes various display-related data including screenshots of a cloud desktop interface. The data amount of the display-type desktop data is large. The file-type desktop data mainly includes file data that needs to be transmitted. The data amount of the file-type desktop data is also large. It should be noted that the above classification method is exemplary, and this embodiment is not limited thereto. In practical applications, other classification methods may be used as required to obtain different classification results. In this embodiment, regardless of the classification method used, step 101 can be performed according to the classification result to allocate appropriate bandwidth upper limit values to different types of desktop data.

In step 101, the network bandwidth estimated in step 100 may be used as a total allocation amount, and is allocated to each type of desktop data according to a bandwidth requirement corresponding to the type of desktop data. It should be understood that the bandwidth upper limit value allocated to each type of desktop data is a concept different from a bandwidth usage value. The bandwidth upper limit value may be used to define a maximum bandwidth that can be used by desktop data. In practice, the desktop data may not use up all the allocated maximum bandwidth, and the unused part of bandwidth can be used by other desktop data. For the bandwidth usage value, the unused part of bandwidth will be left idle and thus wasted. Therefore, allocating the bandwidth upper limit value to each type of desktop data in step 101 can effectively avoid a bandwidth waste, and make full use of the network bandwidth between the cloud desktop terminal and the cloud desktop server, especially when the network conditions are poor. The details of the idea in step 101 can effectively improve the bandwidth utilization rate.

It should also be noted that in the current optimization period, the desktop data that the cloud desktop server needs to transmit to the cloud desktop terminal may not include all the types of desktop data, i.e., the cloud desktop server may only need to transmit some types of desktop data to the cloud desktop terminal. Therefore, in step 101, the bandwidth upper limit value may be allocated only to each type of desktop data that needs to be transmitted from the cloud desktop server to the cloud desktop terminal. In some optional schemes, the types of desktop data to be transmitted from the cloud desktop server to the cloud desktop terminal may be determined based on feedback information sent by the cloud desktop terminal. Therefore, the feedback information may further include desktop data type information corresponding to each data packet received by the cloud desktop terminal from the cloud desktop server. Based on this, types of desktop data appearing in a latest historical time period may be determined according to the feedback information and used as types of desktop data to be transmitted from the cloud desktop server to the cloud desktop terminal. The length of the latest historical time period may be specified as required. Of course, this is merely an example. In some other optional schemes, a specific type of desktop data, e.g., the keyboard/mouse-type desktop data, may be fixedly specified as needing to be transmitted from the cloud desktop server to the cloud desktop terminal; and other types of desktop data that need to be transmitted from the cloud desktop server to the cloud desktop terminal may be determined according to the feedback information. This embodiment is not limited thereto.

Still referring to FIG. 1, in step 102, the data generation rates may be respectively adjusted for the plurality of types of desktop data based on the bandwidth upper limit values allocated.

There are many applications running in the cloud desktop server, such as a player, a browser, a file manager, and/or an input/output device drivers, and some system applications. These applications generate various types of desktop data in an application layer. In step 102, the cloud desktop server may adjust the data generation rate of each type of desktop data in the application layer according to the bandwidth allocation result in step 101.

The bandwidth upper limit value may be converted into a data generation rate upper limit value. It should be understood that the bandwidth upper limit value is usually measured in megabits per second (Mbps), and the data generation rate upper limit value may be measured in Kilobits per second (Kbps). Since there is a conversion relationship between Mbps and Kbps, the bandwidth upper limit value can be conveniently converted into the data generation rate upper limit value. Generally, data generation rate upper limit value = bandwidth upper limit value * 1024. Therefore, the conversion here essentially changes the usage scenario of the numerical value, which further reflects that in step 102, the data generation rate of each type of desktop data is scheduled in the application layer, not in a network layer. Therefore, in step 102, the data generation rate of each type of desktop data can be adjusted in the application layer strictly according to the corresponding data generation rate upper limit value.

In an optional implementation, if desktop data to be adjusted that has exceeded the corresponding data generation rate upper limit value already exists among the plurality of types of desktop data, the data generation rate of the desktop data to be adjusted is adjusted to the corresponding data generation rate upper limit value. In other words, if the actual data generation rate corresponding to a type of desktop data exceeds the data generation rate upper limit value allocated to the type of desktop data, the data generation rate may be reduced to ensure that the data generation rate is lower than or equal to the corresponding data generation rate upper limit value. In this way, it can be ensured that the data amount corresponding to each type of desktop data generated in the application layer does not exceed a data transmission capability (i.e., bandwidth upper limit value) allocated to the type of desktop data. Correspondingly, a total amount of data generated by the application layer does not exceed a data transmission capability corresponding to the network bandwidth estimated in step 100.

If desktop data to be adjusted that has not reached the corresponding data generation rate upper limit value exists among the plurality of types of desktop data, the data generation rate of the desktop data to be adjusted is adjusted to the corresponding data generation rate upper limit value or is kept unchanged. In this case, in different optimization periods during bandwidth allocation in step 101, sufficient bandwidth upper limit values are usually allocated to special types of desktop data to which users have high delay sensitivity, e.g., the keyboard/mouse-type desktop data, so that the data generation rates of these special types of desktop data are already sufficiently high, or can be kept unchanged even if the data generation rates have not reached the corresponding data generation rate upper limit values. Bandwidth upper limit values allocated to desktop data to which users have low delay sensitivity, e.g., the display-type desktop data or the file-type desktop data, may fluctuate greatly in different optimization periods, and these types of desktop data have a high bandwidth requirement. Therefore, the data generation rates of these types of desktop data, when not reaching the corresponding data generation rate upper limit values, may be increased to the data generation rate upper limit values, to optimize user experience corresponding to these types of desktop data.

In this embodiment, the data generation rate may be adjusted in different manners for different types of desktop data:

for audio-type desktop data and display-type desktop data, a bit rate for data encoding is adjusted based on the allocated bandwidth upper limit value; and

for keyboard/mouse-type desktop data and file-type desktop data, a data read rate provided to the cloud desktop terminal is adjusted based on the allocated bandwidth upper limit.

The bit rate refers to the number of data bits used for playing or displaying per unit time, and is measured in Kbps. A higher bit rate indicates higher precision of playing or displaying. The data read rate may refer to the number of data bits that can be read per unit time, and may also be measured in Kbps. A higher data read rate indicates that the reading of data will be completed sooner.

It should be noted that the above classification method of desktop data and the adjustment method used for various types of desktop data are exemplary, and this embodiment is not limited thereto. In practical applications, specific parameter types to be adjusted for different types of desktop data may be set as required to realize the adjustment of data generation rates.

At present, referring to FIG. 3, a plurality of data transmission channels are configured between the application layer and the network layer of the cloud desktop server, and different data transmission channels are used for transmitting different types of desktop data in the application layer to the network layer. Based on this, in a practical application, the data generation rate corresponding to each data transmission channel may be adjusted in step 102.

After the adjustment of the data generation rates is completed, referring to FIG. 1, in step 103, the plurality of types of desktop data generated in the cloud desktop server according to the adjusted data generation rates may be transmitted to the cloud desktop terminal. In other words, in the application layer, data may be generated according to the adjusted data generation rate. The cloud desktop server usually sends the desktop data as it is generated. Therefore, in step 103, the cloud desktop server may immediately send the desktop data generated by the application layer to the cloud desktop terminal through the network.

Referring to FIG. 3, in an optional implementation, independent transmit queues may be allocated and maintained for different types of desktop data. Based on this, through transmit queues respectively maintained for the plurality of types of desktop data, each type of desktop data generated in the cloud desktop server according to the adjusted data generation rates may be forwarded to the cloud desktop terminal.

Referring to FIG. 3, the application layer may write different types of desktop data generated into corresponding transmit queues according to the data generation rates adjusted in step 102, and the transmission module aggregates the desktop data in the transmit queues into a network link, and sends the aggregated desktop data to the cloud desktop terminal through the network link. Since the data generation rate of each type of desktop data has been controlled according to the bandwidth upper limit value in step 101, a total amount of data aggregated into the network link does not exceed the network bandwidth estimated in step 100, which can avoid congestion in the network link. The network link may be a Transmission Control Protocol (TCP) link, a User Datagram Protocol (UDP) link, or the like. The type of the network link used between the cloud desktop terminal and the cloud desktop server is not limited in this embodiment.

Preferably, priority information may further be configured for each of the types of desktop data, so that there is an order of priorities of the types of desktop data, and this order of priorities may be extended to the transmit queues. Based on this, in this preferred implementation, desktop data received in the transmit queue having a higher priority may be preferentially forwarded. The order of priorities may be set according to delay sensitivities of users to different types of desktop data, and a higher priority is set for desktop data corresponding to a higher delay sensitivity. An exemplary order of priorities may be: keyboard/mouse-type desktop data > audio-type desktop data > display-type desktop data > file-type desktop data. In this way, desktop data corresponding to a high delay sensitivity can be preferentially sent to the cloud desktop terminal, thereby optimizing user experience corresponding to these types of desktop data.

It should be understood that the above implementation is merely exemplary, and in this embodiment, other implementations may also be used to transmit the plurality of types of desktop data generated in the cloud desktop server according to the adjusted data generation rates to the cloud desktop terminal. For example, the generated desktop data may be directly added to the network link without being scheduled through the foregoing transmit queues. Since the amount of data has been controlled from the source in this embodiment, this instant transmission method does not cause network congestion. The implementation used to transmit the plurality of types of desktop data generated to the cloud desktop terminal is not limited in this embodiment.

Based on the above, in this embodiment, cloud desktop optimization may be performed periodically. An available network bandwidth between a cloud desktop terminal and a cloud desktop server may be estimated in a single optimization period, and then the network bandwidth may be reasonably allocated to different types of desktop data; further, data generation rates respectively corresponding to the different types of desktop data may be adjusted based on a bandwidth allocation result; and the plurality of types of desktop data generated in the cloud desktop server according to the adjusted data generation rates are transmitted to the cloud desktop terminal. Accordingly, the bandwidth allocation result may be used as a guide to schedule the data generation rates of the plurality of types of desktop data from a source. This can effectively prevent, from exceeding the network bandwidth, a total amount of data sent by the cloud desktop server, thereby avoiding network congestion. In this way, the plurality of types of desktop data can be smoothly transmitted to the cloud desktop terminal, thereby providing a user with smooth use experience even when the network conditions are poor.

In the above or following embodiments, a variety of implementations may be used to allocate the network bandwidth.

In an optional implementation, the bandwidth upper limit values may be sequentially allocated to the plurality of types of desktop data from the network bandwidth according to an order of priorities of the plurality of types of desktop data. As mentioned above, the order of priorities may be set according to delay sensitivities of users to different types of desktop data, and a higher priority is set for desktop data corresponding to a higher delay sensitivity. Based on this, the desktop data having a higher priority may be preferentially allocated a bandwidth upper limit value, and if the network bandwidth has been used up, the desktop data having a lower priority may not be allocated a bandwidth upper limit value. This sequential allocation method can ensure that desktop data corresponding to a high delay sensitivity is preferentially smoothly sent to the cloud desktop terminal, thereby ensuring user experience.

An exemplary sequential allocation scheme may be:
if determining that there is a remaining bandwidth in the network bandwidth when allocating a bandwidth upper limit value to a target type of desktop data, allocating the bandwidth upper limit value to the target type of desktop data from the remaining bandwidth according to a bandwidth occupation rule corresponding to the target type of desktop data; and
calculating a remaining bandwidth after the allocation of the bandwidth upper limit value to the target type of desktop data, for allocating a bandwidth upper limit value to a next type of desktop data,
where the target type of desktop data is any one of the plurality of types of desktop data.

In this exemplary scheme, to allocate the bandwidth upper limit value to any type of desktop data, it may be first determined whether there is still a remaining bandwidth in the network bandwidth. If there is no remaining bandwidth in the network bandwidth, the allocation of the bandwidth upper limit value to the current and subsequent types of desktop data may be stopped, i.e., the transmission of the current and subsequent types of desktop data may be suspended in the current optimization period, to ensure the smooth transmission of desktop data having a higher priority. It should be understood that these suspended desktop data are usually desktop data to which users have low delay sensitivity, and suspending the transmission of such desktop data does not affect user experience. If there is still a remaining bandwidth in the network bandwidth, a bandwidth upper limit value may be allocated to the current type of desktop data from the remaining bandwidth.

In this exemplary sequential allocation scheme, bandwidth occupation rules are further configured respectively for different types of desktop data. The bandwidth occupation rules corresponding to different types of desktop data may not be exactly the same. For example, a bandwidth occupation rule corresponding to keyboard/mouse-type desktop data is to occupy a specified fixed bandwidth upper limit value; a bandwidth occupation rule corresponding to audio-type desktop data is to occupy a specified fixed bandwidth upper limit value; a bandwidth occupation rule corresponding to display-type desktop data is to occupy a specified proportion of a remaining bandwidth in the network bandwidth; and a bandwidth occupation rule corresponding to file-type desktop data is to occupy a whole of a remaining bandwidth in the network bandwidth.

In addition, in this exemplary sequential allocation scheme, the remaining bandwidth left after the allocation of the bandwidth upper limit value to the target type of desktop data needs to be calculated, for allocating a bandwidth upper limit value to a next type of desktop data. A difference between the remaining bandwidth in the network bandwidth and the bandwidth upper limit value allocated to the target type of desktop data may be directly calculated and used as the remaining bandwidth after the allocation of the bandwidth upper limit value to the target type of desktop data. In a preferred scheme, considering that the data generation rate of the target type of desktop data transmitted in the network link between the cloud desktop terminal and the cloud desktop server has not been adjusted according to the bandwidth upper limit value when the bandwidth upper limit value is allocated to the target type of desktop data, the actual bandwidth occupied by the target type of desktop data being transmitted in the network link may not be equal to the bandwidth upper limit value allocated to the target type of desktop data. Therefore, in this preferred scheme,
a data transmission rate determined for the target type of desktop data in a latest statistical period may be obtained; and
a difference between the remaining bandwidth in the network bandwidth and the data transmission rate corresponding to the target type of desktop data is calculated as the remaining bandwidth after the allocation of the bandwidth upper limit value to the target type of desktop data,
where the statistical period is shorter than or equal to the optimization period.

The data transmission rate may be obtained by calculating a data amount of the target type of desktop data transmitted in a single statistical period in the network link, or may be obtained by calculating a data amount transmitted from a transmit queue corresponding to the target type of desktop data in a single statistical period. In addition, when the statistical period is short enough, a real-time transmission rate corresponding to each type of desktop data can be obtained. These statistical tasks may be performed by the transmission module above.

In this way, according to the preferred scheme, the remaining bandwidth calculated in the allocation process can be closer to the actual network bandwidth status between the cloud desktop terminal and the cloud desktop server, so that the rationality and accuracy of bandwidth allocation can be effectively improved.

The following describes an implementation scheme of bandwidth allocation through an exemplary application scenario.
1) First, a bandwidth upper limit value is allocated to keyboard/mouse-type desktop data.

Because the data amount of the keyboard/mouse-type desktop data is very small, there is no need to set a bandwidth limit for the keyboard/mouse-type desktop data, and a fixed value A may be allocated to the keyboard/mouse-type desktop data. The fixed value may be higher than an actual bandwidth requirement of the keyboard/mouse-type desktop data, to preferentially ensure the smooth transmission of the keyboard/mouse-type desktop data.

At this moment, remaining bandwidth left1 = network bandwidth - a, where a is a real-time data transmission rate of the keyboard/mouse-type desktop data.

2) A bandwidth upper limit value is further allocated to audio-type desktop data.

If there is audio-type desktop data needing to be sent to the cloud desktop terminal, a fixed value B may be allocated to the audio-type desktop data. At this moment, remaining bandwidth left2 = left1 - b. If there is no audio-type desktop data needing to be sent to the cloud desktop terminal, left2 = left1, where b is a real-time data transmission rate of the audio-type desktop data.

3) A bandwidth upper limit value is further allocated to display-type desktop data.

If there is no remaining bandwidth (i.e., left2 ≤ 0), allocation of bandwidth upper limit values to the current and subsequent types of desktop data is stopped, and production of these types of desktop data is suspended. Otherwise, a bandwidth upper limit value C = left2 * 70% is allocated to the display-type desktop data.

At this moment, remaining bandwidth left3 = left2 - c, where c is a real-time data transmission rate of the display-type desktop data.

4) A bandwidth upper limit value is further allocated to file-type desktop data.

If there is no remaining bandwidth (i.e., left3 ≤ 0), the allocation of bandwidth upper limit values to the current and subsequent types of desktop data is stopped, and production of these types of desktop data is suspended. Otherwise, a bandwidth upper limit value D = left3 is allocated to the file-type desktop data.

At this moment, remaining bandwidth left4 = left3 - d, where d is a real-time data transmission rate of the file-type desktop data.

Based on the above, by allocating bandwidth upper limit values to various types of desktop data according to the order of priorities, it can be ensured that desktop data corresponding to higher delay sensitivity is preferentially smoothly sent to the cloud desktop terminal, and the remaining bandwidth can be used to send desktop data corresponding to lower delay sensitivity. In this way, through bandwidth allocation, the data transmission capability that the network bandwidth can provide can be properly allocated to different types of desktop data, thereby optimizing user experience.

It should be noted that technical details involved in the above implementations are not limited thereto. For example, corresponding bandwidth upper limit values may be pre-configured for various types of desktop data, so that in the sequential allocation process, the pre-configured bandwidth upper limit values can be sequentially allocated to various types of desktop data from the network bandwidth. In addition, in this embodiment, in addition to the sequential allocation implementation, other implementations may also be used to implement bandwidth allocation. For example, the bandwidth allocation may be performed by equal allocation or the like. This embodiment is not limited thereto.

It should be noted that some processes described in the above embodiments and the drawings include a plurality of operations appearing in a specific order. However, it should be clearly understood that these operations may be performed in an order different from that described herein or may be performed in parallel, and operation numbers such as 101 and 102 are merely used to distinguish different operations, and do not imply any execution order. In addition, these processes may include more or fewer operations, and these operations may be performed sequentially or in parallel.

FIG. 4 is a schematic diagram of a structure of a cloud desktop server according to another exemplary embodiment of this disclosure. As shown in FIG. 4, the computing device includes: a memory 40 and a processor 41.

**The** processor 41 is coupled to the memory 40, and is configured to execute a computer program in the memory 40 to:
estimate a network bandwidth between a cloud desktop terminal and the cloud desktop server in a current optimization period;
perform an allocation operation on the network bandwidth to determine bandwidth upper limit values respectively allocated to a plurality of types of desktop data to be transmitted from the cloud desktop server to the cloud desktop terminal;
adjust for each of the plurality of types of desktop data, a data generation rate for the type of desktop data based on the bandwidth upper limit value allocated to the type of desktop data; and
transmit each type of desktop data generated in the cloud desktop server according to the adjusted data generation rates to the cloud desktop terminal.

In an optional embodiment, when the processor 41 performs the allocation operation on the network bandwidth to determine the bandwidth upper limit values respectively allocated to the plurality of types of desktop data to be transmitted from the cloud desktop server to the cloud desktop terminal, the processor 41 may be specifically configured to:
sequentially allocate the bandwidth upper limit values to the plurality of types of desktop data from the network bandwidth according to an order of priorities of the plurality of types of desktop data.

In an optional embodiment, when the processor 41 sequentially allocates the bandwidth upper limit values to the plurality of types of desktop data from the network bandwidth according to the order of priorities of the plurality of types of desktop data, the processor 41 may be specifically configured to:
if determining that there is a remaining bandwidth in the network bandwidth when allocating a bandwidth upper limit value to a target type of desktop data, allocate the bandwidth upper limit value to the target type of desktop data from the remaining bandwidth according to a bandwidth occupation rule corresponding to the target type of desktop data; and
calculate a remaining bandwidth after the allocation of the bandwidth upper limit value to the target type of desktop data, for allocating a bandwidth upper limit value to a next type of desktop data,
where the target type of desktop data is any one of the plurality of types of desktop data.

In an optional embodiment, when the processor 41 calculates the remaining bandwidth after the allocation of the bandwidth upper limit value to the target type of desktop data, the processor 41 may be specifically configured to:
obtain a data transmission rate determined for the target type of desktop data in a latest statistical period; and
calculate a difference between the remaining bandwidth in the network bandwidth and the data transmission rate corresponding to the target type of desktop data as the remaining bandwidth after the allocation of the bandwidth upper limit value to the target type of desktop data,
where the statistical period is shorter than or equal to the optimization period.

In an optional embodiment, the bandwidth occupation rule corresponding to keyboard/mouse-type desktop data is to occupy a specified fixed bandwidth upper limit value; the bandwidth occupation rule corresponding to audio-type desktop data is to occupy a specified fixed bandwidth upper limit value; the bandwidth occupation rule corresponding to display-type desktop data is to occupy a specified proportion of a remaining bandwidth in the network bandwidth; and the bandwidth occupation rule corresponding to file-type desktop data is to occupy a whole of a the remaining bandwidth in the network bandwidth.

In an optional embodiment, when the processor 41 adjusts, for each of the plurality of types of desktop data, a data generation rate for the type of desktop data based on the bandwidth upper limit value allocated to the type of desktop data, the processor 41 may be specifically configured to:
convert each of the bandwidth upper limit values to a data generation rate upper limit value; and
if desktop data to be adjusted that has exceeded a corresponding data generation rate upper limit value already exists among the plurality of types of desktop data, adjust the data generation rate of the desktop data to be adjusted, to the corresponding data generation rate upper limit value.

In an optional embodiment, when the processor 41 adjusts, for each of the plurality of types of desktop data, a data generation rate for the type of desktop data based on the bandwidth upper limit value allocated to the type of desktop data, the processor 41 may be specifically configured to:
for audio-type desktop data and display-type desktop data, adjust a bit rate for data encoding based on the allocated bandwidth upper limit value; and
for keyboard/mouse-type desktop data and file-type desktop data, adjust a data read rate provided to the cloud desktop terminal based on the allocated bandwidth upper limit.

In an optional embodiment, when the processor 41 transmits each type of desktop data generated in the cloud desktop server according to the adjusted data generation rates to the cloud desktop terminal, the processor 41 may be specifically configured to:
forwarding, through transmit queues respectively maintained for the plurality of types of desktop data, each type of desktop data generated in the cloud desktop server according to the adjusted data generation rates to the cloud desktop terminal.

In an optional embodiment, when the processor 41 forwards, through transmit queues respectively maintained for the plurality of types of desktop data, each type of desktop data to the cloud desktop terminal, the processor 41 may be specifically configured to:
write each type of desktop data generated in the cloud desktop server according to the adjusted data generation rates into the respective transmit queues corresponding to each type of desktop data;
determine an order of priorities of each type of desktop data; and
preferentially forward desktop data received in the transmit queue having a higher priority.

In an optional embodiment, when the processor 41 estimates the network bandwidth between the cloud desktop terminal and the cloud desktop server, the processor 41 may be specifically configured to:
receive feedback information sent by the cloud desktop terminal, where the feedback information includes size information and arrival time information of each data packet received by the cloud desktop terminal from the cloud desktop server; and
estimate the network bandwidth between the cloud desktop terminal and the cloud desktop server according to the feedback information.

In an optional embodiment, when the processor 41 estimates the network bandwidth between the cloud desktop terminal and the cloud desktop server according to the feedback information, the processor 41 may be specifically configured to:
divide a historical time period of a specified length counted backward from a current moment into a plurality of estimation time periods;
determine an amount of data received by the cloud desktop terminal in each of the plurality of estimation time periods according to the feedback information;
calculate, an actual used bandwidth in each of the plurality of estimation time periods according to the amount of data and a time period length corresponding to the estimation time period; and
select a maximum value from the actual used bandwidths respectively corresponding to the estimation time periods as the network bandwidth between the cloud desktop terminal and the cloud desktop server.

Further, as shown in FIG. 4, the cloud desktop server further includes: other components such as a communication component 42 and a power supply component 43. Only some components are schematically shown in FIG. 4, which does not mean that the cloud desktop server only includes the components shown in FIG. 4.

It needs to be noted that the foregoing technical details in embodiments of the cloud desktop server may refer to the related descriptions in the foregoing method embodiment, and details are not described herein again for brevity, but this should not be construed as limiting the protection scope of this disclosure.

Correspondingly, an embodiment of this disclosure further provides a computer-readable storage medium having a computer program stored therein, where the steps in the foregoing method embodiments can be implemented when the computer program is executed.

The memory in FIG. 4 described above is configured to store the computer program, and may be configured to store various other data to support an operation on a computing platform. Examples of such data include instructions for any application or method operating on a computing platform, contact data, phonebook data, messages, images, videos, and the like. The memory may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The communication component in FIG. 4 is configured to facilitate wired or wireless communication between a device in which the communication component is located and another device. The device in which the communication component is located may access a wireless network based on a communication standard, such as Wi-Fi, a mobile communication network, for example, 2G, 3G, 4G/LTE, or 5G, or a combination thereof. In an exemplary embodiment, the communication component receives a broadcast signal or broadcast-related information from an external broadcast management system through a broadcast channel. In an exemplary embodiment, the communication component further includes a near field communication (NFC) module, to facilitate short-range communication. For example, the NFC module may be implemented based on a radio frequency identification (RFID) technology, an infrared data association (IrDA) technology, an ultra-wideband (UWB) technology, a Bluetooth (BT) technology, or another technology.

The power supply component in FIG. 4 provides power to various components of a device in which the power supply component is located. The power supply component may include a power supply management system, one or more power supplies, and other components associated with generating, managing, and allocating power for the device in which the power supply component is located.

A person skilled in the art should understand that embodiments of this disclosure may be provided as a method, a system, or a computer program product. Therefore, this disclosure may use a form of hardware-only embodiments, software-only embodiments, or embodiments combining software and hardware. In addition, this disclosure may use a form of a computer program product implemented on one or more computer-usable storage media (including, but not limited to, a magnetic disk memory, a CD-ROM, an optical memory, and the like) including computer-usable program code.

This disclosure is described with reference to flowcharts and/or block diagrams of the method, the device (system), and the computer program product in embodiments of this disclosure. It should be understood that computer program instructions may be used for implementing each procedure and/or block in the flowcharts and/or block diagrams and a combination of procedures and/or blocks in the flowcharts and/or block diagrams. These computer program instructions may be provided to a general-purpose computer, a dedicated computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements functions specified in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing functions specified in one or more procedures in the flowcharts and/or in one or more blocks in the block diagrams.

In a typical configuration, the cloud desktop server may include one or more processors (CPUs), an input/output interface, a network interface, and an internal storage.

The internal storage may include a non-permanent memory, a random access memory (RAM), a non-volatile memory, such as a read-only memory (ROM) or a flash memory (Flash RAM), and/or the like in a computer-readable medium. The internal storage is an example of the computer-readable medium.

The computer-readable medium includes permanent and non-permanent and removable and non-removable media that can store information by using any method or technology. The information may be a computer-readable instruction, a data structure, a program module, or other data. Examples of the computer storage medium include, but not limited to: a phase-change RAM (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette tape, tape and disk storage or another magnetic storage device or any other non-transmission medium that can be used to store information accessible by the computing device. As defined in this specification, the computer-readable medium does not include transitory computer-readable media (transitory media), such as a modulated data signal and a carrier wave.

It should be further noted that the terms "include," "comprise," and any variation thereof are intended to cover a non-exclusive inclusion. Therefore, in the context of a process, a method, a product, or a device that includes a series of elements, the process, method, product, or device not only includes such elements, but also includes other elements not specified expressly, or may include inherent elements of the process, method, product, or device. Without more limitations, an element defined by the sentence "include a/an..." does not exclude that there are still other same elements in the process, the method, the product, or the device that includes the foregoing elements.

It should be noted that user information (including, but not limited to, user equipment information, user personal information, and the like) and data (including, but not limited to, data for analysis, stored data, displayed data, and the like) involved in this disclosure are information and data that are authorized by a user or that are sufficiently authorized by all parties, related data needs to be collected, used, and processed by complying with related laws and regulations and standards of related countries and regions, and a corresponding operation entry is provided for the user to select to grant or deny authorization.

The foregoing descriptions are merely embodiments of this disclosure, and are not intended to limit this disclosure. For a person skilled in the art, various modifications and variations may be made to this disclosure. Any modification, equivalent replacement, improvement, and the like made without departing from the spirit and principle of this disclosure shall fall within the protection scope of this disclosure.

## Claims

1. A cloud desktop optimization method, comprising:
estimating a network bandwidth between a cloud desktop terminal and a cloud desktop server in a current optimization period;
performing an allocation operation on the network bandwidth to determine bandwidth upper limit values respectively allocated to a plurality of types of desktop data to be transmitted from the cloud desktop server to the cloud desktop terminal;
adjusting, for each of the plurality of types of desktop data, a data generation rate for the type of desktop data based on the bandwidth upper limit value allocated to the type of desktop data; and
transmitting each type of desktop data generated in the cloud desktop server according to the adjusted data generation rates to the cloud desktop terminal.

2. The method according to claim 1, wherein the performing the allocation operation on the network bandwidth to determine the bandwidth upper limit values respectively allocated to the plurality of types of desktop data to be transmitted from the cloud desktop server to the cloud desktop terminal comprises:
sequentially allocating the bandwidth upper limit values to the plurality of types of desktop data from the network bandwidth according to an order of priorities of the plurality of types of desktop data.

3. The method according to claim 2, wherein the sequentially allocating the bandwidth upper limit values to the plurality of types of desktop data from the network bandwidth according to the order of priorities of the plurality of types of desktop data comprises:
in response to determining that there is a remaining bandwidth in the network bandwidth when allocating a bandwidth upper limit value to a target type of desktop data, allocating the bandwidth upper limit value to the target type of desktop data from the remaining bandwidth according to a bandwidth occupation rule corresponding to the target type of desktop data; and
calculating a remaining bandwidth after the allocation of the bandwidth upper limit value to the target type of desktop data, for allocating a bandwidth upper limit value to a next type of desktop data,
wherein the target type of desktop data is any one of the plurality of types of desktop data.

4. The method according to claim 3, wherein the calculating the remaining bandwidth after the allocation of the bandwidth upper limit value to the target type of desktop data comprises:
obtaining a data transmission rate determined for the target type of desktop data in a latest statistical period; and
calculating a difference between the remaining bandwidth in the network bandwidth and the data transmission rate corresponding to the target type of desktop data as the remaining bandwidth after the allocation of the bandwidth upper limit value to the target type of desktop data,
wherein the statistical period is shorter than or equal to the optimization period.

5. The method according to claim 3, wherein
the bandwidth occupation rule corresponding to keyboard/mouse-type desktop data is to occupy a specified fixed bandwidth upper limit value;
the bandwidth occupation rule corresponding to audio-type desktop data is to occupy a specified fixed bandwidth upper limit value;
the bandwidth occupation rule corresponding to display-type desktop data is to occupy a specified proportion of a remaining bandwidth in the network bandwidth; and
the bandwidth occupation rule corresponding to file-type desktop data is to occupy a whole of a remaining bandwidth in the network bandwidth.

6. The method according to claim 1, wherein the adjusting, for each of the plurality of types of desktop data, a data generation rate for the type of desktop data based on the bandwidth upper limit value allocated to the type of desktop data comprises:
converting each of the bandwidth upper limit values to a data generation rate upper limit value; and
in response to desktop data to be adjusted that has exceeded a corresponding data generation rate upper limit value already existing among the plurality of types of desktop data, adjusting the data generation rate of the desktop data to be adjusted, to the corresponding data generation rate upper limit value.

7. The method according to claim 1, wherein the adjusting, for each of the plurality of types of desktop data, a data generation rate for the type of desktop data based on the bandwidth upper limit values allocated to the type of desktop data comprises:
for audio-type desktop data and display-type desktop data, adjusting a bit rate for data encoding based on the allocated bandwidth upper limit value; and
for keyboard/mouse-type desktop data and file-type desktop data, adjusting a data read rate provided to the cloud desktop terminal based on the allocated bandwidth upper limit.

8. The method according to claim 1, wherein the transmitting each type of desktop data generated in the cloud desktop server according to the adjusted data generation rates to the cloud desktop terminal comprises:
forwarding, through transmit queues respectively maintained for the plurality of types of desktop data, each type of desktop data generated in the cloud desktop server according to the adjusted data generation rates to the cloud desktop terminal.

9. The method according to claim 8, wherein the forwarding, through transmit queues respectively maintained for the plurality of types of desktop data, each type of desktop data generated in the cloud desktop server according to the adjusted data generation rates to the cloud desktop terminal comprises:
writing each type of desktop data generated in the cloud desktop server according to the adjusted data generation rates into the respective transmit queues corresponding to each type of desktop data;
determining an order of priorities of each type of desktop data; and
preferentially forwarding desktop data received in the transmit queue having a higher priority.

10. The method according to claim 1, wherein the estimating the network bandwidth between the cloud desktop terminal and the cloud desktop server comprises:
receiving feedback information sent by the cloud desktop terminal, wherein the feedback information comprises size information and arrival time information of each data packet received by the cloud desktop terminal from the cloud desktop server; and
estimating the network bandwidth between the cloud desktop terminal and the cloud desktop server according to the feedback information.

11. The method according to claim 10, wherein the estimating the network bandwidth between the cloud desktop terminal and the cloud desktop server according to the feedback information comprises:
dividing a historical time period of a specified length counted backward from a current moment into a plurality of estimation time periods;
determining an amount of data received by the cloud desktop terminal in each of the plurality of estimation time periods according to the feedback information;
calculating an actual used bandwidth in each of the plurality of estimation time periods according to the amount of data and a time period length corresponding to the estimation time period; and
selecting a maximum value from the actual used bandwidths respectively corresponding to the estimation time periods as the network bandwidth between the cloud desktop terminal and the cloud desktop server.

12. A cloud desktop server, comprising a memory and a processor, wherein
the memory is configured to store one or more computer instructions; and
the processor is coupled to the memory, and is configured to execute the one or more computer instructions to implement the cloud desktop optimization method according to any one of claims 1 to 11.

13. A computer-readable storage medium, having computer instructions stored therein, wherein the computer instructions, when executed by one or more processors, cause the one or more processors to perform the cloud desktop optimization method according to any one of claims 1 to 11.
